# EUROPÄISCHE PATENTSCHRIFT

(11) **EP 0 678 008 B1**
(45) Veröffentlichungstag und Bekanntmachung des Hinweises auf die Patenterteilung: **09.09.1998**
(21) Anmeldenummer: 94931446.2
(22) Anmeldetag: 04.11.1994
(51) Int. Cl.: A61C 17/06, B01D 21/00

(54) **ABSCHEIDER**
SEPARATOR
SEPARATEUR

(30) Priorität: 05.11.1993 AT 2244/93
(43) Veröffentlichungstag der Anmeldung: 25.10.1995
(73) Patentinhaber: Trawöger, Werner, 6173 Oberperfuss (AT); PREGENZER, Bruno, 6173 Oberperfuss (AT)
(72) Erfinder: Trawöger, Werner, 6173 Oberperfuss (AT); PREGENZER, Bruno, 6173 Oberperfuss (AT)
(74) Vertreter: Torggler, Paul, Dr.
(86) Internationale Anmeldenummer: AT9400165
(87) Internationale Veröffentlichungsnummer: WO9512365

(56) Entgegenhaltungen:
- WO-A-89/04152
- US-A- 5 018 971

## Beschreibung

Die Erfindung betrifft einen Abscheider zur Trennung eines in einer zahnärztlichen Absauganlage anfallenden Saugluft-Feststoff-Flüssigkeitsgemisches, wobei die Absauganlage eine Saugpumpe, eine das Gemisch aus dem Mund des Patienten absaugende Saugdüse und eine zwischen der Saugdüse und der Saugpumpe Verlaufende Saugleitung aufweist, die durch den Abscheider in zwei Abschnitte unterteilt ist, mit einem an den ersten Abschnitt der Saugleitung anschließbaren, mit Umlenkflächen Versehenen Luftabscheideraum, der einen an den zweiten Abschnitt der Saugleitung anschließbaren Reinluftauslaß und einen Auslaß für das abgetrennte Feststoff-Flüssigkeits-Gemisch aufweist, mit einer dem Gemischauslaß zugeordneten Abscheidevorrichtung für die Feststoffe, die einen abnehmbaren Sedimentationsbehälter und einen Reinflüssigkeitsauslaß aufweist, und mit einer Einrichtung zur Zuführung der Reinflüssigkeit in den zweiten Abschnitt der Saugleitung, die einen mit dem Reinflüssigkeitsauslaß Verbundenen Zwischenbehälter aufweist.

Abscheider dieser Art werden beispielsweise dann in zahnärztlichen Behandlungseinrichtungen benötigt, wenn die zentrale Saugpumpe durch eine Wasserringpumpe gebildet ist, die einer Zufuhr Von Flüssigkeit zum Ausgleich Von Verlusten im Wasserring bedarf, oder wenn der Abscheider in eine bestehende Anlage eingebaut werden soll, deren Saugpumpe ein Saugluft-Flüssigkeitsseparator Vorgeschaltet ist, dessen Funktionsfähigkeit erhalten bleiben muß. Ein hiefür geeigneter, gegebenenfalls auch eine Zentrifuge für die Feststofftrennung aufweisender, Abscheider ist in der US-PS 5,018,971 beschrieben, wobei der die Reinflüssigkeit sammelnde und eventuelle Restfeststoffe sedimentierende Zwischenbehälter, sowie die insbesondere ein Venturirohr aufweisende Zufuhreinrichtung der Reinflüssigkeit in den zweiten Abschnitt der Saugleitung im wesentlichen schematisch an beliebiger Stelle gezeigt sind.

Die Erfindung hat es sich nun zur Aufgabe gestellt, einen derartigen Abscheider als konstruktiv kompaktes, raumsparendes Gerät auszubilden, das in bekannter Weise in den Arbeitsplatz einbaubar ist.

Erfindungsgemäß wird dies dadurch erreicht, daß der Zwischenbehälter unterhalb des Luftabscheideraumes angeordnet ist und beide gemeinsam seitlich neben der Feststoffabscheidevorrichtung Vorgesehen sind, und daß der Reinluftauslaß des Luftabscheideraumes an einem mit dem zweiten Abschnitt der Saugleitung verbindbaren Rohr Vorgesehen ist, das durch den Zwischenbehälter geführt ist und eine Reinflüssigkeitseintrittsöffnung aufweist. Diese Ausbildung führt zu einer kompakten Konstruktion, die nebeneinander eine Luftbehandlungsstation und eine Feststoffbehandlungsstation aufweist. In der Luftbehandlungsstation wird eingangsseitig die Luft abgetrennt und ihr ausgangsseitig wieder die Flüssigkeit zugegeben, die in der Feststoffbehandlungsstation von den Feststoffen abgetrennt wurde. Die Feststoffbehandlungsstation kann, da sie sich über die Höhe des Luftabscheideraumes und der Reinflüssigkeitszufuhreinrichtung erstreckt, eine Zentrifuge umfassen, wobei in dieser bevorzugten Ausführung vorgesehen ist, daß der Sedimentationsbehälter unterhalb der Vollmantelzentrifuge und seitlich neben dem Zwischenbehälter angeordnet und mit dem Gemischauslaß des Luftabscheideraumes sowie mit dem Schlammauslaß der Zentrifuge verbunden ist, und daß eine Einrichtung zur Zuführung der sich im Sedimentationsbehälter sammelnden, Restfeststoffe enthaltenden Flüssigkeit in die Zentrifuge vorgesehen ist.

Der Gemischauslaß des Luftabscheideraumes und/oder der Reinflüssigkeitseinlaß des bevorzugt ebenfalls abnehmbaren Zwischenbehälters und/oder das Ende des den Zwischenbehälter durchsetzenden Rohres sind bevorzugt jeweils seitlich vorgesehen.

Nachstehend wird nun die Erfindung anhand der Figuren der beiliegenden Zeichnungen näher beschrieben, ohne darauf beschränkt zu sein.

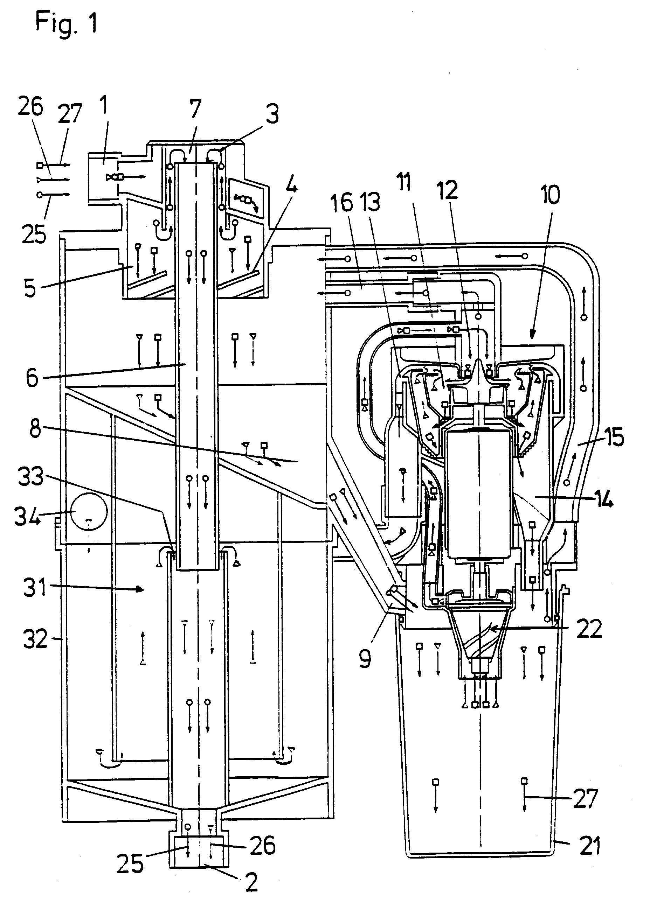

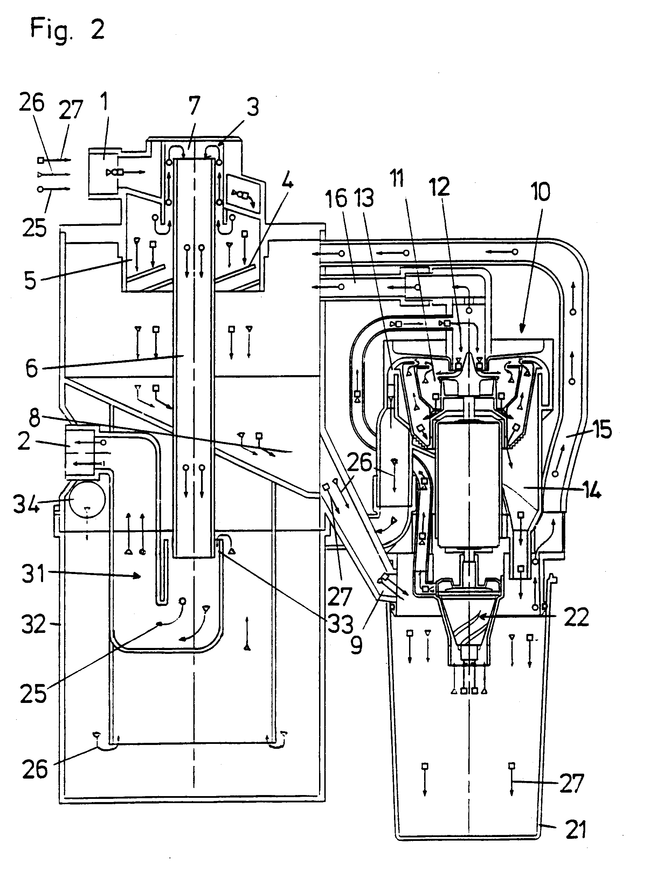

Die Fig. 1 und 2 zeigen schematische Vertikalschnitte durch zwei Verschiedene Ausführungsbeispiele des Abscheiders.

Der Abscheider ist in eine Saugleitung eingesetzt, die über ihren ersten Abschnitt 1 aus dem Mund des Patienten abzusaugendes Luft-Flüssigkeits-Feststoffgemisch 25,26,27 zum Abscheider zuführt und über ihren zur Saugpumpe führenden zweiten Abschnitt 2 ein gereinigtes Luft-Flüssigkeitsgemisch 25,26 abtransportiert. Wenn die Saugpumpe eine Wasserringpumpe darstellt, so kann das gereinigte Luft-Flüssigkeitsgemisch dieser direkt zugeführt werden, wobei die Flüssigkeit auch Wasserringverluste ersetzen kann. Der Abscheider umfaßt eine Luftbehandlungssstation, die mit den beiden Abschnitten 1,2 der Saugleitung verbindbar ist und eine seitlich daneben angeordnete Feststoffabscheidevorrichtung 10. Die Luftbehandlungsstation weist einen mit Umlenkflächen 4 und/oder einer Zyklonanordnung versehenen Luftabscheideraum 5 auf, unterhalb dessen ein eine Reinflüssigkeitszufuhreinrichtung 31 aufweisender Zwischenbehälter 32 angeordnet ist, in den über einen Einlaß 34 Reinflüssigkeit 26 aus der Feststoffabscheidevorrichtung 10 einfließt. Die im Luftabscheideraum 5 abgetrennte Saugluft 25 verläßt diesen durch ein Rohr 6, das an den zweiten Abschnitt 2 der Saugleitung anschließbar ist und durch den Zwischenbehälter 32 geführt ist, wobei der Reinluftauslaß 3 des Luftabscheideraumes 5 an der oberen innerhalb der Umlenkfläche 4 liegenden Lufteintrittsöffnung des Rohres 6 vorgesehen ist. In dem durch den Zwischenbehälter 32 führenden Bereich des Rohres 6 ist eine Reinflüssigkeitseintrittsöffnung 33 ausgebildet.

Im unteren Bereich des Luftabscheideraumes 5 verläuft schräg nach unten ein Auslaß 8 für das von der Luft 25 befreite Gemisch 26,27 in einen Sedimentationsbehälter 21 der Feststoffabscheidevorrichtung 10, der abnehmbar an der Unterseite einer Vollmantelzentrifuge 11 angeordnet ist. Der Vollmantelzentrifuge 11 ist eine Einrichtung 22 zugeordnet, die die sich oberhalb der im Sedimentationsbehälter 21 sedimentierenden Feststoffe 27 sammelnde Flüssigkeit 26 und Restfeststoffe zum obenliegenden Gemischeinlaß 12 zuführt, wobei die Einrichtung 22 insbesondere eine gemeinsam mit der Zentrifuge angetriebene Pumpe aufweist. Die in der Zentrifuge 11 abgeschiedene Reinflüssigkeit 26 verläßt diese über den obenliegenden Reinflüssigkeitsauslaß 13 und mündet durch den Einlaß 34 in den Zwischenbehälter 32. Die in der Zentrifuge 11 abgetrennten Feststoffe fließen bei Stillstand gemeinsam mit Restflüssigkeit durch den unteren Schlammauslaß 14 in den Sedimentationsbehälter 21, in dem die Feststoffe sedimentieren, und aus dem Restflüssigkeit gemeinsam mit über den Gemischauslaß 8 nachfolgenden Flüssigkeit und enthaltenen Restfeststoffen wieder zum Gemischeinlaß 12 der Zentrifuge 11 zurückgeführt wird. Da der komplette Abscheider im Unterdruck der Saugpumpe liegt, sind zwischen dem Sedimentationsbehälter 21 sowie dem Gemeinscheinlaß 12 der Zentrifuge 11 und dem Luftabscheideraum 5 Luftausgleichsleitungen 15,16 Vorgesehen. Ein eventueller Speischalenabfluß kann über den ersten Abschnitt der Saugleitung, wenn die Speischale in Form eines beweglichen Trichters an die Saugleitung angeschlossen wird, oder über eine entsprechende Ventilsteuerung in den Luftabscheideraum 5, in den Sedimentationsbehälter 21 oder in den Gemischeinlaß 12 der Zentrifuge erfolgen.

In der Ausführung nach Fig. 1 ist der Anschluß des Rohres 6 an dem zweiten Abschnitt der Saugleitung am Boden des Zwischenbehälters 32 vorgesehen. Nach Fig. 2 ist das Rohr 6 wieder nach oben geführt und der Anschluß direkt unterhalb des Luftabscheideraumes 5 seitlich ausgebildet. In dieser Ausführung ist der ebenfalls abnehmbar ausgebildete Zwischenbehälter 32, in den noch enthaltene Feststoffe aus der Reinflüssigkeit sedimentieren können, besser zugänglich, da er ohne Unterbrechung von Leitungsanschlüssen ebenso wie der Sedimentationsbehälter 21 nach unten abgenommen werden kann.

## Patentansprüche

1. Abscheider zur Trennung eines in einer zahnärztlichen Absauganlage anfallenden Saugluft-Feststoff-Flüssigkeitsgemisches, wobei die Absauganlage eine Saugpumpe, eine das Gemisch aus dem Mund des Patienten absaugende Saugdüse und eine zwischen der Saugdüse und der Saugpumpe verlaufende Saugleitung aufweist, die durch den Abscheider in zwei Abschnitte (1,2) unterteilt ist, mit einem an den ersten Abschnitt (1) der Saugleitung anschließbaren, mit Umlenkflächen (4) Versehenen Luftabscheideraum (5), der einen an den zweiten Abschnitt (2) der Saugleitung anschließbaren Reinluftauslaß (3) und einen Auslaß (8) für das abgetrennte Feststoff-Flüssigkeits-Gemisch aufweist, mit einer dem Gemischauslaß (8) zugeordneten Abscheidevorrichtung (10) für die Feststoffe, die einen abnehmbaren Sedimentationsbehälter (21) und einen Reinflüssigkeitsauslaß (13) aufweist, und mit einer Einrichtung (31) zur Zuführung der Reinflüssigkeit in den zweiten Abschnitt (2) der Saugleitung, die einen mit dem Reinflüssigkeitsauslaß (13) verbundenen Zwischenbehälter (32) aufweist, dadurch gekennzeichnet, daß der Zwischenbehälter (32) unterhalb des Luftabscheideraumes (5) angeordnet ist und beide gemeinsam seitlich neben der Feststoffabscheidevorrichtung (10) vorgesehen sind, und daß der Reinluftauslaß (3) des Luftabscheideraumes (5) an einem mit dem zweiten Abschnitt (2) der Saugleitung verbindbaren Rohr (6) vorgesehen ist, das durch den Zwischenbehälter (32) geführt ist und eine Reinflüssigkeitseintrittsöffnung (33) aufweist.

2. Abscheider nach Anspruch 1, bei dem die Abscheidevorrichtung (10) für die Feststoffe eine Vollmantelzentrifuge (11) umfaßt, die einen oberen Reinflüssigkeitsauslaß (13) und einen unteren Schlammauslaß (14) aufweist, dadurch gekennzeichnet, daß der Sedimentationsbehälter (21) unterhalb der Vollmantelzentrifuge (11) und seitlich neben dem Zwischenbehälter (32) angeordnet und mit dem Gemischauslaß (8) des Luftabscheideraumes (5) sowie mit dem Schlammauslaß (14) der Zentrifuge (11) verbunden ist, und daß eine Einrichtung (22) zur Zuführung der sich im Sedimentationsbehälter (21) sammelnden, Restfeststoffe enthaltenden Flüssigkeit in die Zentrifuge (11) vorgesehen ist.

## Claims

1. Separator for separating a suction air-solids-liquid mixture in a dental suction apparatus, whereby the suction apparatus comprises a suction pump, a suction nozzle aspirating the mixture from the mouth of the patient and a suction line extending between the suction nozzle and the suction pump, which suction line is divided into two sections (1, 2) by the separator, with an air separation chamber (5) provided with deflector surfaces (4) and connectible to the first section (1) of the suction line, which separation chamber (5) comprises a clean air outlet (3) connectible to the second section (2) of the suction line and an outlet (8) for the separated solids-liquid mixture, a separation device (10) for the solid matter assigned to the mixture outlet (8), which separation device comprises a removable sedimentation container (21) and a clean liquid outlet (13), and a device (31) for feeding the clean liquid into the second section (2) of the suction line, which device comprises an intermediate container (32) connected to the clean liquid outlet (13), characterized in that the intermediate container (32) is disposed below the air separation chamber (5) and that both are provided laterally adjacent the solid matter separation device (10), and that the clean air outlet (3) of the air separation chamber (5) is provided at a tube (6) which is connectible to the second section (2) of the suction line, which tube extends through the intermediate container (32) and includes a clean liquid admission port (33).

2. Separator according to claim 1, in which the separation device (10) for the solid matter includes a solid bowl centrifuge (11) which has an upper clean liquid outlet (13) and a lower sludge outlet (14), characterized in that the sedimentation container (21) is disposed below the solid bowl centrifuge (11) and laterally adjacent the intermediate container (32), and is connected with the mixture outlet (8) of the air separation chamber (5) as well as with the sludge outlet (14) of the centrifuge (11), and that a device (22) is provided for supplying into the centrifuge (11) the liquid collecting in the sedimentation container (21) and containing remaining solid matter.

## Revendications

1. Séparateur pour séparer un mélange air aspirématières solides-liquide produit dans une installation d'aspiration pour cabinet dentaire, l'installation d'aspiration comprenant une pompe aspirante, une buse d'aspiration qui aspire le mélange à partir de la bouche du patient, et une conduite d'aspiration qui va de la buse d'aspiration à la pompe aspirante et qui est divisée par le séparateur en deux sections (1, 2), lequel séparateur est composé d'un espace de séparation d'air (5) qui est apte à être relié à la première section (1) de la conduite d'aspiration, qui est pourvu de surfaces formant déflecteurs (4) et qui comporte une sortie d'air pur (3) apte à être reliée à la seconde section (2) de la conduite d'aspiration, et une sortie (8) pour le mélange matières solides-liquide séparé ; d'un dispositif séparateur (10) pour les matières solides, qui est associé à la sortie de mélange (8) et qui comporte un récipient de sédimentation amovible (21) et une sortie de liquide pur (13) ; et d'un dispositif (31) qui est destiné à amener le liquide pur dans la seconde section (2) de la conduite d'aspiration et qui comporte un récipient intermédiaire (32) relié à la sortie de liquide pur (13),
caractérisé en ce que le récipient intermédiaire (32) est disposé au-dessous de l'espace de séparation d'air (5) et tous les deux sont prévus conjointement sur le côté du dispositif de séparation de matières solides (10), et en ce que la sortie d'air pur (3) de l'espace de séparation d'air (5) est prévue sur un tuyau (6) qui est apte à être relié à la seconde section (2) de la conduite d'aspiration, qui traverse le récipient intermédiaire (32) et qui comporte une ouverture d'entrée de liquide pur (33).

2. Séparateur selon la revendication 1, dans lequel le dispositif de séparation (10) pour les matières solides comporte une centrifugeuse à bol plein (11) pourvue d'une sortie supérieure de liquide pur (13) et d'une sortie inférieure de dépôt (14), caractérisé en ce que le récipient de sédimentation (21) est disposé au-dessous de la centrifugeuse à bol plein (11) et sur le côté du récipient intermédiaire (32), et est relié à la sortie de mélange (8) de l'espace de séparation d'air (5) et à la sortie de dépôt (14) de la centrifugeuse (11), et en ce qu'il est prévu un dispositif (22) pour amener dans la centrifugeuse (11) le liquide qui s'accumule dans le récipient de sédimentation (21) et qui contient des matières solides résiduaires.
